# EUROPÄISCHE PATENTANMELDUNG

(11) **EP 3 312 957 A1**
(43) Veröffentlichungstag der Anmeldung: **25.04.2018**
(21) Anmeldenummer: 17001749.5
(22) Anmeldetag: 24.10.2017
(51) Int. Cl.: H02G 3/04, H02G 3/06

(54) **GEBOGENER LEITUNGSBAHN**

(30) Priorität: 24.10.2016 DE 102016012641
(71) Anmelder: PUK Group GmbH & Co. KG, 12057 Berlin (DE)
(72) Erfinder: Schubert, Karl, D-10439 Berlin (DE); Gens, Lothar, D-57319 Bad Berleburg (DE)
(74) Vertreter: Jungblut & Seuss

(57) **Zusammenfassung**

Die Erfindung betrifft eine Leitungsbahn (1), mit zwei einander gegenüberliegenden und sich in horizontaler Richtung längs erstreckenden Seitenwänden (2, 3), wobei die Seitenwände (2, 3) im Bereich ihrer unteren Kante über eine Mehrzahl von Verbindungsstege (4) oder über einen Boden miteinander verbunden sind, mit einem Bogenbereich (5), in welchem die Leitungsbahn (1) eine Bogen oder eine Abzweigung in einer im Wesentlichen horizontalen Ebene aufweist, wobei in dem Bogenbereich (5) zumindest die bogeninnere Seitenwand (2) ein Bogenelement (6) mit einem Bogenteil (7) und zwei geraden Verbindungslaschen (8, 9), welche mit den Enden des Bogenteils (7), bezogen auf dessen Längserstreckung, verbunden sind, aufweist, und wobei die freien Enden der Verbindungslaschen (8, 9) mit gerade ausgebildeten Seitenwandholmen (10, 11) einer Seitenwand (2) verschraubt oder vernietet sind. Sie ist dadurch gekennzeichnet, daß die Verbindungslaschen (8, 9) in Richtung ihrer Längserstreckung betrachtet jeweils eine Stufe (12, 13) aufweisen mit der Maßgabe, dass die freien Enden der Verbindungslaschen (8, 9) in Richtung nach außen der Leitungsbahn versetzt sind.

## Beschreibung

### Gebiet der Erfindung

Die Erfindung betrifft eine Leitungsbahn, insbesondere eine Kabelbahn, mit zwei einander gegenüberliegenden und sich im Wesentlichen in horizontaler Richtung längs erstreckenden Seitenwänden, wobei die Seitenwände im Bereich ihrer unteren Kante über eine Mehrzahl von in Richtung der Längserstreckung der Seitenwände voneinander beabstandete Verbindungsstege oder über einen Boden miteinander verbunden sind, mit einem Bogenbereich, in welchem die Leitungsbahn eine Bogen oder eine Abzweigung in einer im Wesentlichen horizontalen Ebene aufweist, wobei in dem Bogenbereich zumindest die bogeninnere Seitenwand ein Bogenelement mit einem Bogenteil und zwei geraden Verbindungslaschen, welche mit den Enden des Bogenteils, bezogen auf dessen Längserstreckung, verbunden sind, aufweist, und wobei die freien Enden der Verbindungslaschen mit gerade ausgebildeten Seitenwandholmen einer Seitenwand verschraubt oder vernietet sind.

### Stand der Technik und Hintergrund der Erfindung

Leitungsbahnen des eingangs genannten Aufbaus sind vielfältig aus der Praxis bekannt. Diese Leitungsbahnen dienen dazu, Versorgungsleitungen, wie beispielsweise elektrische Kabel und sonstige Leitungen zu kanalisieren, zu führen und zu halten.

Ein grundsätzliches Problem bei Leitungsbahnen des Standes der Technik stellt sich im Bereich von Bögen oder Abzweigungen ein. Typischerweise werden zur Realisierung einer Richtungsänderung sogenannte Bogen- oder Polygonzugelemente zwischen den geraden Abschnitten der Leitungsbahn eingesetzt. Hierzu werden die geraden Seitenwände an einer vorgegebenen Stelle durchtrennt. Ein einzusetzendes Bogenelement wird dann mit seinen Enden an die Enden der Ausklinkungen der Seitenwände befestigt. Hierbei erfolgt eine solche Befestigung nicht auf Stoß, sondern überlappend, mittels Befestigungslaschen des Bogenelements und typischerweise Verschrauben. Dies führt jedoch durch Versatz zu innenseitig der Leitungsbahn frei stehenden vertikalen Kanten entweder durch ein Ende einer Verbindungslasche oder ein Ende der geraden Seitenwand. Insbesondere eine Kante an einem Ende der geraden Seitenwand ist meist aufgrund des Ausklinkens sehr scharfkantig, auch weil ein aufwändiger Entgratungsprozeß möglicherweise nicht stattfindet. Wird nun ein elektrisches Kabel um einen solchen Bogen gezogen, so kann durch solche scharfen Kanten innenseitig der Leitungsbahn eine Kabelummantelung beschädigt oder gar zerstört werden. Auch beim Einziehen von anderen Leitungen, beispielsweise Rohrleitungen für Fluide, besteht ein vergleichbares Risiko, insbesondere wenn eine solche Rohrleitung auf Basis einer mehrschichtigen Wandung mit Polymeraußenwandung ausgebildet ist. Dies stört aus offensichtlichen Gründen.

### Technisches Problem der Erfindung

Der Erfindung liegt daher das technische Problem zugrunde, eine Leitungsbahn anzugeben, durch welche Kabel auch im Bereich von Bögen beschädigungsfrei eingezogen werden können.

### Grundzüge der Erfindung und bevorzugte Ausführungsformen

Zur Lösung dieses technischen Problems lehrt die Erfindung, daß die Verbindungslaschen in Richtung ihrer Längserstreckung betrachtet jeweils eine Stufe aufweisen mit der Maßgabe, dass die freien Enden der Verbindungslaschen in Richtung nach außen der Leitungsbahn versetzt sind.

Mit anderen Worten ausgedrückt, der Radius des (bogeninnen liegenden) Bogenteils mit erfindungsgemäß ausgebildeten Laschen ist größer als der Radius eines entsprechenden Bogenteils wobei die Laschen ohne solche Stufen ausgebildet sind. Das Bogenteil erstreckt sich also um die Höhe der Stufen nach innen in die Leitungsbahn hinein bzw. der Radius des Bogenteils ist nach innen (in Bezug auf die Leitungsbahn) verschoben.

Mit der Erfindung wird erreicht, dass aufgrund der Stufen ein um das Bogenelement gezogenes Kabel im Laschenbereich nicht direkt am Laschenbereich vollständig anliegend gezogen wird, sondern durch die Stufe unter Zugspannung in spitzem Winkel von der Seitenwand weg geführt ist. Dadurch wird ein Kontakt zu innenseitig der Leitungsbahn frei stehenden vertikalen (scharfen bzw. nicht entgrateten) Kanten entweder an einem Ende einer Verbindungslasche oder an einem Ende der geraden Seitenwand vermieden. Letztendlich kann ein Kabel um den Bogenbereich gezogen werden, ohne Risiko einer Beschädigung der Ummantelung aufgrund von Kanten im Verbindungsbereich der Verbindungslaschen.

Im Einzelnen bestehen verschiedene Weiterbildungen.

So kann vorgesehen sein, dass die Stufen aus zwei im Wesentlichen betragsmäßig gleichen oder verschiedenen und vorzeichenverschiedenen Stufenwinkeln im Bereich von 20 bis 130°, vorzugsweise im Bereich von 40 bis 95°, gebildet sind. Im Querschnitt betrachtet hat die Lasche im Bereich einer Stufe eine S- oder Z-Form. Die Stufenhöhe der Stufen liegt typischerweise im Bereich von 1 oder 2 bis 50 mm, insbesondere von 3 bis 30 mm, vorzugsweise von 4 bis 20 mm, beispielsweise von 4 bis 10 mm. Die Stufenwinkel weisen vorzugsweise mindestens einen Radius auf, welche der Dicke des Materials der Verbindungslasche beträgt, beispielsweise 1 mm. Der Radius kann bis zu 10 mm, vorzugsweise bis zu 5 mm, betragen.

Bevorzugt ist es, wenn das Bogenelement aus Bogenteil und Verbindungslaschen einstückig ausgebildet sind. Selbstverständlich ist auch eine mehrstückige Ausführung möglich, beispielsweise dreistückig, wobei dann Das Bogenteil und die Verbindungslaschen miteinander vernietet, verschraubt, oder verschwiesst werden.

In diesem Zusammenhang ist anzumerken, dass das Bogenelement aus beliebigen fachüblichen Werkstoffen ausgebildet sein kann. Hierzu gehören organische Polymerwerkstoffe ebenso wie metallische Werkstoffe, beispielsweise Stahl (verzinkt oder unverzinkt) oder Edelstahl.

In einer besonders vorteilhaften Ausführungsform ist das mit dem Bogenelement ein Bogenbodenelement vorzugsweise stoffschlüssig verbunden ist, wobei das Bogenbodenelement Leitungsbahninnenseitig angeordnet ist. Mit dem Bogenbodenelement lässt sich das Bogenelement an Verbindungsstegen oder Boden der Leitungsbahn befestigen. Das Bogenbodenelement erstreckt sich vorzugsweise über 50 - 100% der Länge, insbesondere 70 - 90% der Länge, der gesamten Längserstreckung des Bogenteils, symmetrisch oder asymmetrisch. Es kann beispielsweise an den Übergängen zwischen Bogenteil und Verbindungslaschen enden, oder auch, beispielsweise wenn das Bogenteil an seinen Enden jeweils einen geraden Abschnitt aufweist, an den Enden des gekrümmten Bereichs des Bogenteils.

Die Kanten des Bogenbodenelements weisen in einer besonders vorteilhaften Weiterbildung der Erfindung eine nach unten weisende Abkantung auf, vorzugsweise einer Breite von 2 bis 50 mm, insbesondere von 5 bis 30 mm, höchstvorzugsweise von 5 bis 20 mm, und vorzugsweise eines Abkantungswinkels von 1 bis 45°, insbesondere 1 bis 20°, höchstvorzugsweise 1 bis 10°. Durch diese Abkantung wird sichergestellt, dass ein Kabel frei von der Kante des Bogenbodenelements um das Bogenelement gezogen werden und folglich nicht dem Risiko einer Beschädigung der ummantelung durch die Kante des Bogenbodenteils ausgesetzt ist.

Zur Befestigung des Bogenelements mit einem Boden oder Verbindungsstegen der Leitungsbahn kann das Bogenbodenelement Langlöcher zum Verschrauben des Bogenbodenteils mit dem Boden oder Verbindungsstegen aufweisen. Vorzugsweise ist eine Vielzahl paralleler Langlöcher vorgesehen, so dass sich stets Verbindungselemente, wie Schrauben, in ein Langloch und ein korrespondierendes Loch im Boden oder in einer Verbindungsleiste einführen lassen. Die Längsrichtung der Langlöcher kann dabei beispielsweise parallel zum Mittenradius des Bogenteils verlaufen. Als Mittenradius ist eine Linie bezeichnet, von welcher sich der Bogenteil beidseitig mit gleicher Längserstreckung erstreckt.

Das Bogenteil kann im Prinzip eine beliebige (konvexe, betrachtet vom Inneren der Leitungsbahn) Form aufweisen. Insbesondere kann in einer horizontalen Ebene betrachtet eine Kreissegmentform oder eine Polygonform vorliegen. Der Radius des Bogenteils beträgt typischerweise zwischen 10 und 500 mm, vorzugsweise zwischen 100 und 500 mm, insbesondere zwischen 200 und 500 mm. Das Bogenteil kann einen Winkel von 10 bis 135°, insbesondere von 40 bis 100° überspannen. Typische Winkel sind 45° und 90°. Um einen entsprechenden Winkel knickt die Leitungsbahn dann insgesamt im Bereich des Bogenelements ab.

Die Erfindung ist nicht nur bei unverzweigten Bögen einsetzbar, sondern auch beispielsweise bei T-Verzweigungen. Hier werden dann erfindungsgemäße Bogenelemente zweckmäßigerweise an beiden Innenkurven der Verzweigung vorgesehen.

Die Erfindung ist des Weiteren nicht nur bei im Wesentlichen horizontal verlaufenden Leitungsbahnen einsetzbar, sondern auch bei schräg oder vertikal verlaufenden Leitungsbahnen (beispielsweise Übergang von der Vertikalen in die Horizontale).

Im Folgenden wird die Erfindung anhand von lediglich Ausführungsbeispiele darstellenden Figuren näher erläutert. Es zeigen:
- Figur 1:: eine schematische Aufsicht auf eine erfindungsgemäße Leitungsbahn im Bereich eines Bogenelements,
- Figur 2:: ein erfindungsgemäß eingesetztes Bogenelement,
- Figur 3:: eine Detailansicht des Gegenstandes der Figur 2 im Bereich einer Stufe (a) sowie eine Variante hiervon (b),
- Figur 4:: Eine T-Verzweigung mit zwei erfindungsgemäß eingesetzten Bogenelementen.

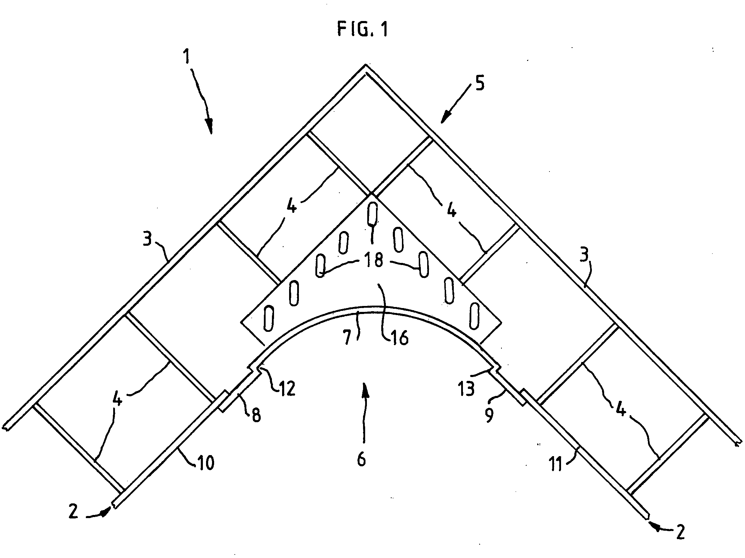

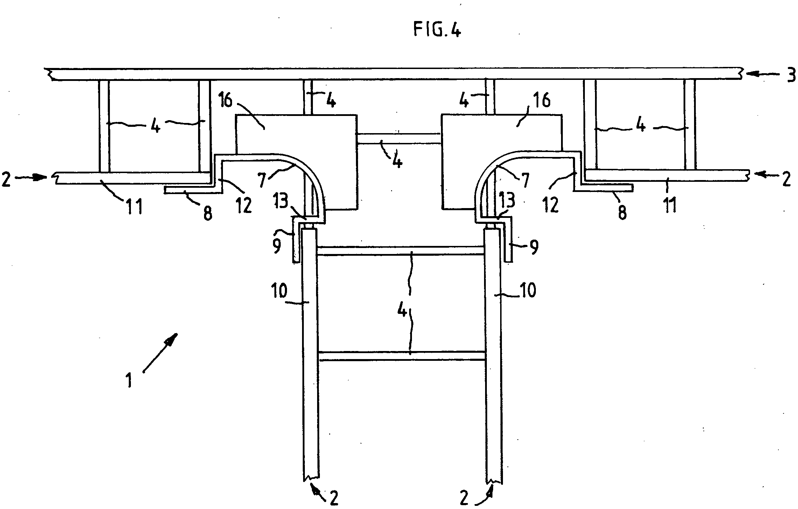

In der Figur 1 erkennt man eine Leitungsbahn 1, mit zwei einander gegenüberliegenden und sich im Wesentlichen in horizontaler Richtung längs erstreckenden Seitenwänden 2, 3. Die Seitenwände 2, 3 sind im Bereich ihrer unteren Kante über eine Mehrzahl von in Richtung der Längserstreckung der Seitenwände 2, 3 voneinander beabstandete Verbindungsstege 4 (oder über einen nicht dargestellten Boden) miteinander verbunden. Die Leitungsbahn 1 weist einen Bogenbereich 5 auf, in welchem die Leitungsbahn 1 in einem Bogen oder mit einer Abzweigung bzw. Verzweigung (siehe auch Figur 4) in einer meist im Wesentlichen horizontalen Ebene (Papierebene der Figuren 1 und 4) verläuft. In dem Bogenbereich 5 ist zumindest die bogeninnere Seitenwand 2 mit einem Bogenelement 6 mit einem Bogenteil 7 und zwei geraden Verbindungslaschen 8, 9 ausgebildet. Die Verbindungslaschen 8,9 sind im Ausführungsbeispiel mit den Enden des Bogenteils 7, bezogen auf dessen Längserstreckung, einstückig verbunden. Die freien Enden der Verbindungslaschen 8, 9 mit gerade ausgebildeten Seitenwandholmen 10, 11 einer Seitenwand 2 verschraubt.

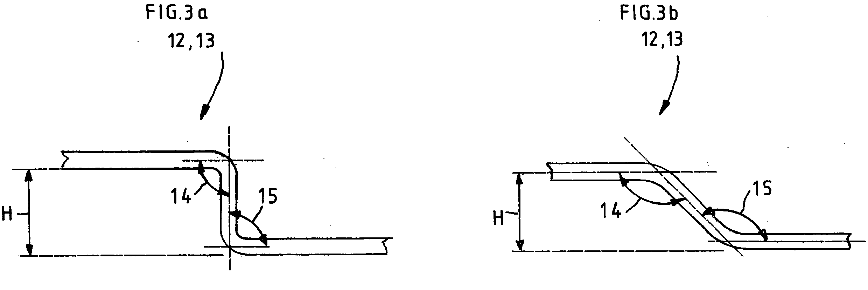

Insbesondere einer vergleichenden Betrachtung der Figuren 1 bis 3 entnimmt man, daß die Verbindungslaschen 8, 9 in Richtung ihrer Längserstreckung betrachtet jeweils eine Stufe 12, 13 aufweisen mit der Maßgabe, dass die freien Enden der Verbindungslaschen 8, 9 in Richtung nach außen der Leitungsbahn versetzt sind. Insbesondere der Figur 3 ist entnehmbar, dass die Stufen 12, 13 aus zwei im Wesentlichen betragsmäßig gleichen und vorzeichenverschiedenen Stufenwinkeln 14, 15 gebildet sind In der Figur 3a betragen die Stufenwinkel 14 und 15 ca. 90° bzw -90°. In der Figur 3a betragen die Stufenwinkel 14 und 15 ca. 45° bzw -45°. Die Höhe (H) der Stufen 12, 13 beträgt mindestens die Wandstärke bzw. Materialdicke der Seitenwand 2, im Beispiel ca. 10 mm.

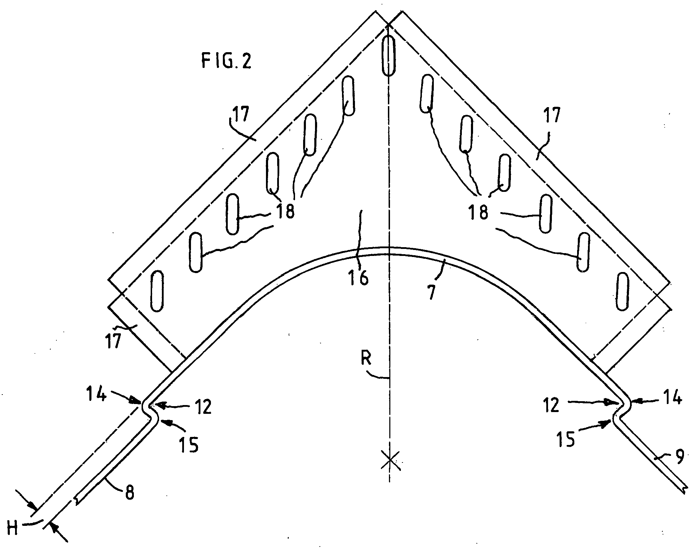

Den Figuren 1 und 2 wiederum ist entnehmbar, dass mit dem Bogenelement 6 ein Bogenbodenelement 16 vorzugsweise stoffschlüssig verbunden ist, wobei das Bogenbodenelement 16 Leitungsbahninnenseitig angeordnet ist.

Das Bogenbodenelement 16 erstreckt sich über die gesamte Längserstreckung des Bogenteils 7. Die Kanten des Bogenbodenelements 16 weisen eine nach unten weisende Abkantung 17 auf (Figur 2). In dem Bogenbodenelement 16 sind Langlöcher 18 zum Verschrauben des Bogenbodenelements 16 mit den Verbindungsstegen 4 vorgesehen. Die Längsrichtung der Langlöcher 18 verläuft parallel zum Mittenradius R des Bogenteils.

Den Figuren 1 und 2 ist entnehmbar, dass das Bogenteil 7 in einer horizontalen Ebene bzw. in der Papierebene betrachtet eine Kreissegmentform oder eine Polygonform aufweist.

In der Figur 4 ist eine Variante der Erfindung mit T-Verzweigung dargestellt. Man erkennt, dass erfindungsgemäß eingesetzte Bogenelemente 6 zweckmäßigerweise an beiden Innenkurven der Verzweigung vorgesehen sind.

## Patentansprüche

1. Leitungsbahn (1), mit zwei einander gegenüberliegenden und sich im Wesentlichen in horizontaler Richtung längs erstreckenden Seitenwänden (2, 3), wobei die Seitenwände (2, 3) im Bereich ihrer unteren Kante über eine Mehrzahl von in Richtung der Längserstreckung der Seitenwände (2, 3) voneinander beabstandete Verbindungsstege (4) oder über einen Boden miteinander verbunden sind, mit einem Bogenbereich (5), in welchem die Leitungsbahn (1) ein Bogen oder eine Abzweigung in einer im Wesentlichen horizontalen Ebene aufweist, wobei in dem Bogenbereich (5) zumindest die bogeninnere Seitenwand (2) ein Bogenelement (6) mit einem Bogenteil (7) und zwei geraden Verbindungslaschen (8, 9), welche mit den Enden des Bogenteils (7), bezogen auf dessen Längserstreckung, verbunden sind, aufweist, und wobei die freien Enden der Verbindungslaschen (8, 9) mit gerade ausgebildeten Seitenwandholmen (10, 11) einer Seitenwand (2) verschraubt oder vernietet sind,
**dadurch gekennzeichnet,**
**daß** die Verbindungslaschen (8, 9) in Richtung ihrer Längserstreckung betrachtet jeweils eine Stufe (12, 13) aufweisen mit der Maßgabe, dass die freien Enden der Verbindungslaschen (8, 9) in Richtung nach außen der Leitungsbahn versetzt sind.

2. Leitungsbahn nach Anspruch 1, **dadurch gekennzeichnet, dass** die Stufen (12, 13) aus zwei im Wesentlichen betragsmäßig gleichen oder verschiedenen und vorzeichenverschiedenen Stufenwinkeln (14, 15) im Bereich von 20 bis 130° gebildet sind.

3. Leitungsbahn nach einem der Ansprüche 1 oder 2, **dadurch gekennzeichnet, dass** die Höhe der Stufen (12, 13) im Bereich von 2 bis 50 mm, insbesondere von 3 bis 30 mm, vorzugsweise von 4 bis 20 mm, beträgt.

4. Leitungsbahn nach einem der Ansprüche 1 bis 3, **dadurch gekennzeichnet, dass** das Bogenelement (6) aus Bogenteil (7) und Verbindungslaschen (8, 9) einstückig oder mehrstückig, beispielsweise dreistückig, ausgebildet sind.

5. Leitungsbahn nach einem der Ansprüche 1 bis 4, **dadurch gekennzeichnet, dass** mit dem Bogenelement (6) ein Bogenbodenelement (16) vorzugsweise stoffschlüssig verbunden ist, wobei das Bogenbodenelement (16) Leitungsbahninnenseitig angeordnet ist.

6. Leitungsbahn nach Anspruch 5, **dadurch gekennzeichnet, dass** sich das Bogenbodenelement (16) über 50 - 100% der Länge, insbesondere 70 - 90% der Länge, der gesamten Längserstreckung des Bogenteils (7) erstreckt, symmetrisch oder asymmetrisch.

7. Leitungsbahn nach einem der Ansprüche 5 oder 6, **dadurch gekennzeichnet, dass** Kanten des Bogenbodenelements (16) eine nach unten weisende Abkantung (17) aufweisen, vorzugsweise einer Breite von 1 bis 50 mm, insbesondere von 5 bis 30 mm, höchstvorzugsweise von 5 bis 20 mm, und vorzugsweise eines Abkantungswinkels von 1 bis 45°, insbesondere 1 bis 20°, höchstvorzugsweise 1 bis 10°.

8. Leitungsbahn nach einem der Ansprüche 5 bis 7, **dadurch gekennzeichnet, dass** das Bogenbodenelement (16) Langlöcher (18) zum Verschrauben des Bogenbodenelement (16) mit dem Boden oder Verbindungsstegen (4) aufweist.

9. Leitungsbahn nach Anspruch 8, **dadurch gekennzeichnet, dass** die Längsrichtung der Langlöcher (18) parallel zum Mittenradius (R) des Bogenteils (7) verlaufen.

10. Leitungsbahn nach einem der Ansprüche 1 bis 9, **dadurch gekennzeichnet, dass** das Bogenteil (7) in einer horizontalen Ebene betrachtet eine Kreissegmentform oder eine Polygonform aufweist.
